# EUROPÄISCHE PATENTANMELDUNG

(11) **EP 1 187 145 A1**
(43) Veröffentlichungstag der Anmeldung: **13.03.2002**
(21) Anmeldenummer: 01118117.9
(22) Anmeldetag: 26.07.2001
(51) Int. Cl.: G21F 5/08

(54) **Stossdämpfer für einen Behälter**

(30) Priorität: 11.09.2000 US 658949
(71) Anmelder: GNB Gesellschaft für Nuklear-Behälter mbH, 45127 Essen (DE)
(72) Erfinder: Spilker, Harry,Dr., 31848 Bad Münder (DE); Jones, Bill,Dr., 92626 Costa Mesa, CA (US)
(74) Vertreter: Albrecht, Rainer Harald, Dr.-Ing.

(57) **Zusammenfassung**

Ein Stoßdämpfer (4) für den Deckel- und/oder Bodenbereich (3, 5) eines Behälters (2) für den Transport von radioaktivem Material besteht aus einem mit dem Behälterende (3) verschraubbaren Stoßdämpferbehältnis (7) mit einer auf dessen Innenseite befindlichen Ausnehmung (8) für das Behälterende (3), mit einer mit Abstand vom Behälterende (3) angeordneten metallischen Durchstanzschutzplatte (9) und mit einer metallischen Stoßdämpferstruktur (10, 11), die im Bereich des das Behälterende (3) übergreifenden Teils aus einem Winkelring mit Radialstegen (10) besteht. Das Stoßdämpferbehältnis (7) enthält ein nichtmetallisches Füllmaterial. Optimale Verhältnisse für Vertikal- und Horizontalfall des Behälters (2) sind gegeben, wenn die Stoßdämpferstruktur (10, 11) oberhalb des Behälterendes (3) aus einem die Querschnittsabmessungen des Behälters (2) aufweisenden Stufenpyramidenelement (11) mit zur freien Außenseite (12) hin stufig abnehmender Wandstärke besteht und das Stoßdämpferbehältnis (7) ansonsten mit einem Kunststoffschaum (14, 15) ausgeschäumt ist.

## Beschreibung

Die Erfindung betrifft einen Stoßdämpfer für den Deckel- und/oder Bodenbereich eines aus Metall, insbesondere hochfestem Stahl bestehenden Behälters für den Transport von radioaktivem Material, insbesondere abgebrannten Kernreaktorbrennelementen, bestehend aus einem mit dem betreffenden Behälterende verschraubbaren metallischen Stoßdämpferbehältnis mit einer auf dessen Innenseite befindlichen Ausnehmung für das Behälterende, mit einer mit Abstand vom Behälterende angeordneten metallischen Durchstanzschutzplatte und mit einer metallischen Stoßdämpferstruktur, die im Bereich des das Behälterende übergreifenden Teils aus Radialstegen besteht, wobei das Stoßdämpferbehältnis ansonsten ein nichtmetallisches Füllmaterial enthält.

Bei einem aus der Praxis bekannten, druckschriftlich nicht näher belegten Stoßdämpferaufsatz der genannten Art besteht die Stoßdämpferstruktur oberhalb des Behälterendes aus Verlängerungen der Radialstege und sind in den Zwischenräumen zwischen den Radialstegen Holzkörper aus nebeneinander und rechtwinklig zueinander angeordneten Kanthölzern angeordnet. Hierdurch endet der stoßkraftübertragende Bereich mehr oder weniger mit der Überdeckungslänge des Behälters, so dass bei einem Horizontalfall nur ein verhältnismäßig geringes Verformungsvolumen zur Verfügung steht und hohe Verzögerungswerte gegeben sind.

Der Erfindung liegt die Aufgabe zugrunde, bei einem Stoßdämpferaufsatz der eingangs genannten Art den stoßkraftübertragenden Bereich zu vergrößern und somit ein größeres Verformungsvolumen für den Horizontalfall bereitzustellen.

Die erfindungsgemäße Lösung dieser Aufgabe besteht darin, dass die Stoßdämpferstruktur oberhalb des Behälterendes aus einem die Querschnittsabmessungen des Behälters aufweisenden Stufenpyramidenelement mit zur freien Außenseite hin stufig abnehmender Wandstärke besteht und das Stoßdämpferbehältnis ansonsten mit einem Kunststoffschaum ausgeschäumt ist.

Bei dem erfindungsgemäßen Stoßdämpfer wird durch das Stufenpyramidenelement eine erhebliche Vergrößerung des stoßkraftübertragenden Bereichs erreicht. Die Besonderheit des Stufenpyramidenelementes besteht darin, dass für den Horizontalfall eine größere innere Steifigkeit erzeugt wird, bei einem Vertikalfall hingegen eine Knautschzone wirkt und sich folglich geringere Verzögerungswerte ergeben. Ferner wird durch den Einsatz des Kunststoffschaumes als Dämpfungsmaterial bei wesentlich einfacherer Herstellbarkeit eine gleichmäßigere Kräfteverteilung erreicht.

Nach bevorzugter Ausführungsform ist der Stoßdämpferbehälteraufsatz für einen kreiszylindrischen Behälter rotationssymmetrisch ausgebildet. Günstige Verformungsverhältnisse ergeben sich auch, wenn das Stoßdämpferbehältnis eine sich innerhalb des Stufenpyramidenelementes von der Außenseite bis zur Durchstanzschutzplatte erstreckende Zentralausnehmung aufweist. Als Kunststoffschaum empfiehlt sich insbesondere ein Polyurethanschaum. Optimale Ergebnisse stellen sich in diesem Zusammenhang ein, wenn der außerhalb des Stufenpyramidenelementes befindliche Kunststoffschaum härter eingestellt ist als der innerhalb des Stufenpyramidenelementes befindliche Kunststoffschaum.

Im Folgenden wird die Erfindung anhand einer ein Ausführungsbeispiel darstellenden Zeichnung erläutert. Es zeigen
- **Fig. 1**: perspektivisch einen teilweise aufgeschnittenen Behälter mit Stoßdämpferaufsatz,
- **Fig. 2**: einen Längsschnitt durch den Stoßdämpferaufsatz gemäß Fig. 1 und
- **Fig. 3**: perspektivisch den unausgeschäumten Gegenstand der Fig. 2.

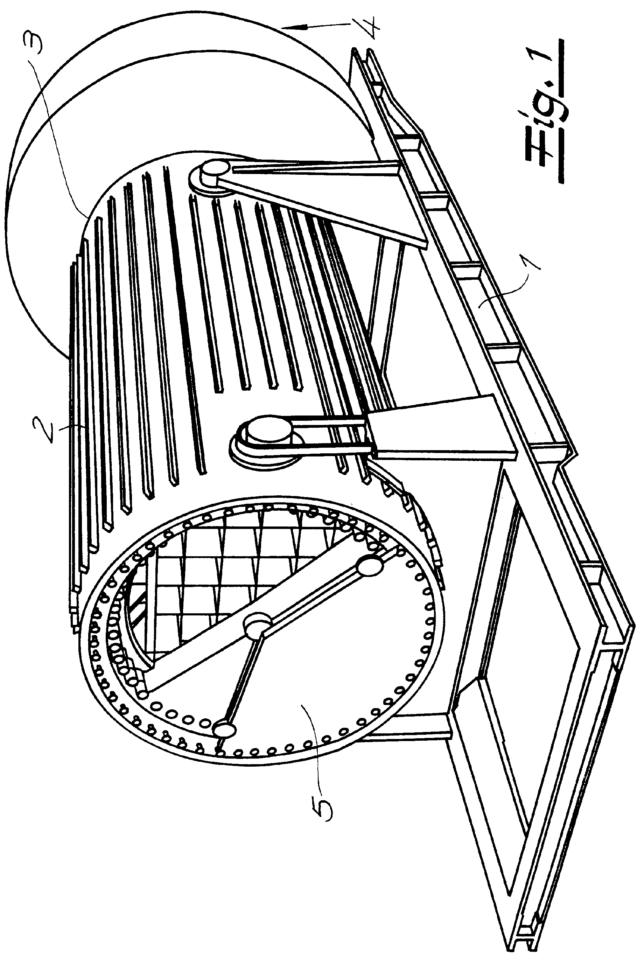

In Fig. 1 erkennt man zunächst einen in einem Gestell 1 gelagerten Behälter 2 für den Transport von abgebrannten Kernreaktorbrennelementen.

Der kreiszylindrische Behälter 2 ist aus Stahl oder Guss gefertigt. Auf den Bodenbereich 3 des Behälters 2 ist ein Stoßdämpferaufsatz 4 aufgesetzt. Auf den aus Erläuterungsgründen nur teilweise dargestellten Deckelbereich 5 ist ein ebensolcher Stoßdämpferaufsatz 4 aufgesetzt, der aus genannten Gründen aber nicht dargestellt ist.

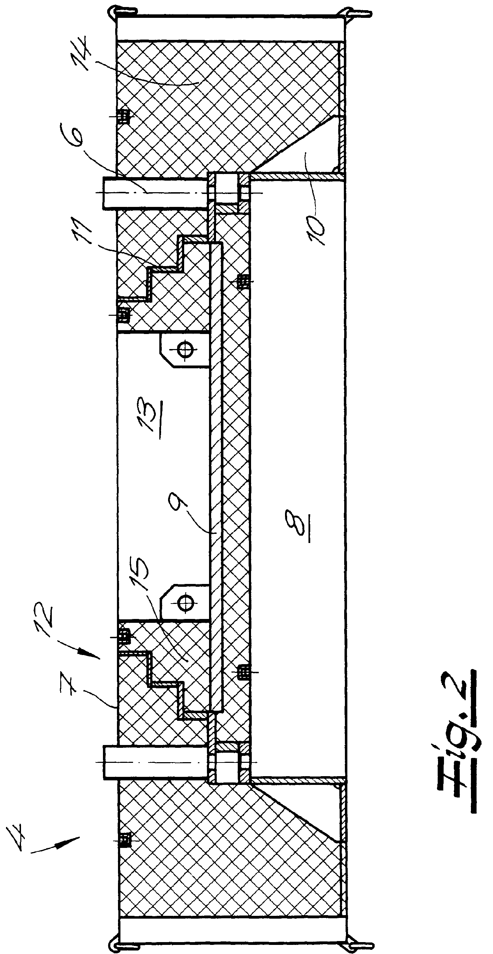

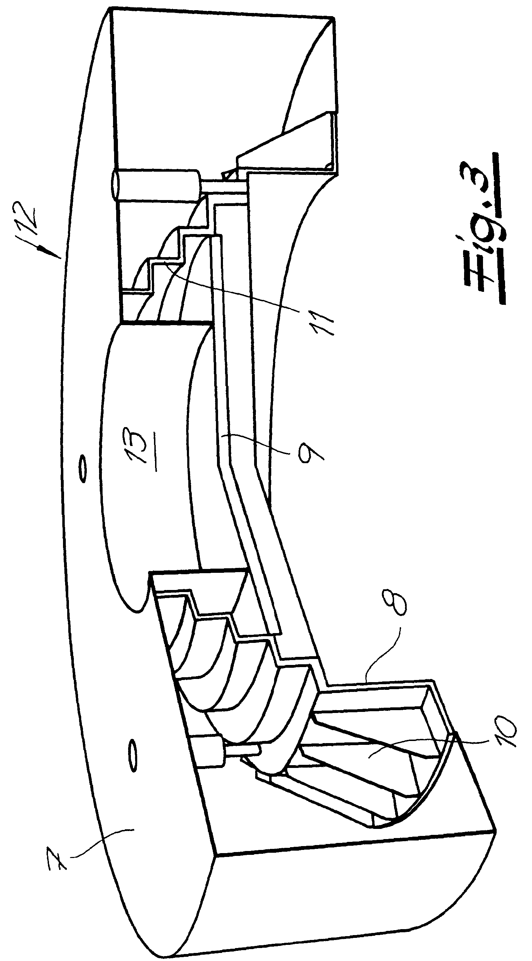

Wie aus den Fig. 2 und 3 deutlich ersichtlich ist, besteht der Stoßdämpferaufsatz 4 aus einem aus Blech gefertigen, mit dem betreffenden Behälterende 3 bzw. 5 mittels Schraubbolzen 6 verschraubbaren kreiszylindrischen Stoßdämpferbehältnis 7. Dieses weist auf seiner Innenseite eine entsprechend kreisförmige Ausnehmung 8 für das Behälterende 3, eine mit Abstand vom Behälterende 3 angeordnete metallische Durchstanzschutzplatte 9 aus z. B. Panzerstahl und eine die Durchstanzschutzplatte 9 umgebene Stoßdämpferstruktur 10, 11 auf. Letztere besteht im Bereich des das Behälterende 3 übergreifenden Teils aus einem Winkelring mit dreieckförmigen Radialstegen 10 und oberhalb des Behälterendes 3 aus einem Stufenpyramidenelement 11 mit zur freien Außenseite 12 hin stufig abnehmender Wandstärke (vgl. Fig. 2). Das Stufenpyramidenelement 11 weist an seinem dem Behälterende 3 zugewandten Ende die Querschnittsabmessungen des Behälters 2 auf und nimmt im Durchmesser zur Außenseite 12 hin ab. Ferner weist das Stoßdämpferbehältnis 7 noch eine Zentralausnehmung 13 auf, die sich innerhalb des Stufenpyramidenelementes 11 von der Außenseite 12 bis zur Durchstanzplatte 9 erstreckt.

Das Stoßdämpferbehältnis 7 ist ansonsten mit einem Kunststoff ausgeschäumt, der im außerhalb des Stufenpyramidenelementes 11 befindlichen Bereich 14 härter als im innerhalb des Stufenpyramidenelementes 11 befindlichen Bereich 15 eingestellt ist.

## Patentansprüche

1. Stoßdämpferaufsatz für den Deckel- und/oder Bodenbereich (3, 5) eines aus Stahl oder Guss bestehenden Behälters (2) für den Transport von radiaktivem Material, insbesondere abgebrannten Kernreaktorbrennelementen, bestehend aus einem mit dem betreffenden Behälterende (3) verschraubbaren metallischen Stoßdämpferbehältnis (7) mit einer auf dessen Innenseite befindlichen Ausnehmung (8) für das Behälterende (3), mit einer mit Abstand vom Behälterende (3) angeordneten metallischen Durchstanzschutzplatte (9) und mit einer metallischen Stoßdämpferstruktur (10, 11), die im Bereich des das Behälterende (3) übergreifenden Teils einem Winkelring mit aus Radialstegen (10) besteht, wobei das Stoßdämpferbehältnis (7) ein nichtmetallisches Füllmaterial enthält, **dadurch gekennzeichnet, dass** die Stoßdämpferstruktur (10, 11) oberhalb des Behälterendes (3) aus einem die Querschnittsabmessung des Behälters (2) aufweisenden Stufenpyramidenelement (11) mit zur freien Außenseite (12) hin stufig abnehmender Wandstärke besteht und das Stoßdämpferbehältnis (7) ansonsten mit einem Kunststoffschaum (14, 15) ausgeschäumt ist.

2. Stoßdämpferaufsatz nach Anspruch 1, **dadurch gekennzeichnet, dass** das Stoßdämpferbehältnis (7) rotationssymmetrisch ist.

3. Stoßdämpferaufsatz nach Anspruch 1 oder 2, **dadurch gekennzeichnet, dass** das Stoßdämpferbehältnis (7) eine sich innerhalb des Stufenpyramindenelementes (11) von der Außenseite (12) bis zur Durchstanzschutzplatte (9) erstreckende Zentralausnehmung (13) aufweist.

4. Stoßdämpferaufsatz nach einem der Ansprüche 1 bis 3, **dadurch gekennzeichnet, dass** das Stoßdämpferbehältnis (7) mit einem Polyurethanschaum ausgeschäumt ist.

5. Stoßdämpferaufsatz nach einem der Ansprüche 1 bis 4, **dadurch gekennzeichnet, dass** der außerhalb des Stufenpyramidenelementes (11) befindliche Kunststoffschaum (14) härter eingestellt ist als der innerhalb des Stufenpyramindenelementes (11) befindliche Kunststoffschaum (15).
